# EUROPÄISCHE PATENTSCHRIFT

(11) **EP 0 510 600 B1**
(45) Veröffentlichungstag und Bekanntmachung des Hinweises auf die Patenterteilung: **25.10.1995**
(21) Anmeldenummer: 92106863.1
(22) Anmeldetag: 22.04.1992
(51) Int. Cl.: B01D 53/48, B01D 53/52

(54) **Verfahren zum Entfernen von Schwefelwasserstoff und/oder Schwefelkohlenstoff aus Abgasen**
Process for eliminating hydrogen sulphide and/or carbon bisulfphide from exhaust gases
Procédé d'élimination d'hydrogène sulfuré et/ou de sulfure de carbone de gaz d'échappement

(30) Priorität: 24.04.1991 LU 87923
(43) Veröffentlichungstag der Anmeldung: 28.10.1992
(73) Patentinhaber: EUROPÄISCHE ATOMGEMEINSCHAFT (EURATOM), L-2920 Luxembourg (LU)
(72) Erfinder: Van Velzen, Daniel, Brebbia (IT); Langenkamp, Heinrich, Cadrezzate (IT)
(74) Vertreter: Weinmiller, Jürgen

(56) Entgegenhaltungen:
- EP-A- 0 016 290
- EP-A- 0 171 570
- WO-A-81/03346
- US-A- 2 809 930
- US-A- 3 401 101

## Beschreibung

Die Erfindung betrifft ein Verfahren zum Entfernen von Schwefelwasserstoff und/oder Schwefelkohlenstoff aus Abgasen. Beide genannten Stoffe entstehen allein oder gemeinsam als Abgase chemotechnischer Prozesse, beispielsweise bei der Herstellung von Kunstseide. Sie sind sehr gesundheitsgefährdende Schadstoffe. Schwefelkohlenstoff (CS₂) kann akute und chronische Formen von Vergiftungen hervorrufen, mit psychologischen und verhaltensmäßigen Veränderungen, sofern der Patient einer Konzentration zwischen 30 und 120 mg/m³ ausgesetzt war. Aus diesem Grund werden für Arbeitsplätze Höchstwerte für die Konzentration von Schwefelkohlenstoff unter 30 mg/m³ vorgeschrieben.

Schwefelwasserstoff (H₂S) ist ähnlich giftig. Bei Konzentrationen um 5000 ppm besteht die Gefahr eines unmittelbaren Komas. Die derzeit gültigen Höchstwerte für Schwefelwasserstoff liegen bei etwa 15 mg/m³.

Bekannte Verfahren für die Entfernung von H₂S und CS₂ beruhen hauptsächlich auf der Absorption an Aktivkohle. Für die Entfernung von Schwefelwasserstoff alleine gibt es Reinigungsverfahren, die meist eine Ätznatronlösung als Reinigungsmittel verwenden. All diese Verfahren sind teuer und erzeugen ihrerseits wieder erheblich schädliche Abwässer.

Aufgabe der Erfindung ist es daher, ein Verfahren der eingangs genannten Art anzugeben, bei dem keine teuren Reinigungsmittel verbraucht werden und keine umweltbelastenden Abwässer entstehen.

Diese Aufgabe wird erfindungsgemäß dadurch gelöst, daß die Abgase mit Wasser und Brom in Kontakt gebracht werden, wobei die Brommenge etwas geringer als für das stöchiometrische Gleichgewicht der Reaktionen mit den genannten Stoffen erforderlich gewählt wird, so daß Schwefelsäure und Bromwasserstoffsäure in wässriger Lösung und ggfs. Kohlendioxid gebildet werden, und daß aus der Bromwasserstoffsäure in einer Elektrolysezelle wieder Brom und Wasserstoff erzeugt werden.

Es ist vorteilhaft, anschließend die Schwefelsäure aufzukonzentrieren und die zu reinigenden Abgase vorab durch den Schwefelsäurekonzentrator zu leiten, dem die gebildete wässrige Lösung zugeführt wird, so daß diese zusammen mit den Abgasen den Konzentrator in Dampfform verläßt. Falls die Abgase auf hohem Temperaturniveau zur Verfügung stehen, kann ihr Wärmeinhalt allein oder in Verbindung mit einer äußeren Wärmequelle für den Betrieb des Schwefelsäurekonzentrators herangezogen werden.

Es ist an sich bekannt, daß Brom in der Lage ist, aus Schwefelverbindungen elementaren Schwefel zu erzeugen. Beispiele solcher Prozesse sind in den US-Patentschriften 2 809 930 und 3 401 101 beschrieben. Überraschenderweise ergibt sich beim erfindungsgemäßen Verfahren dagegen Schwefelsäure, die aufkonzentriert und verkauft werden kann.

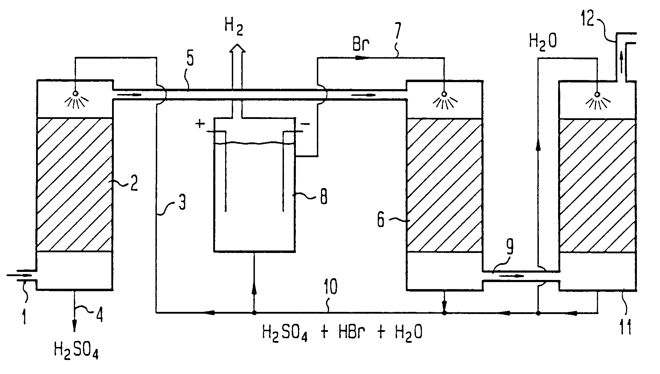

Die Erfindung wird nun anhand eines bevorzugten Ausführungsbeispiels mit Hilfe der einzigen Zeichnung näher erläutert, die schematisch eine Anlage zur Durchführung des erfindungsgemäßen Verfahrens zeigt.

Bringt man Schwefelwasserstoff und Schwefelkohlenstoff mit Brom und Wasser in Verbindung, dann entsteht Schwefelsäure und Bromwasserstoffsäure etwa gemäß folgenden Formeln:

H₂S + 4Br₂ + 4H₂O → H₂SO₄ + 8HBr

CS₂ + 8Br₂ + 10H₂O → 2H₂SO₄ + CO₂ + 16 HBr

Die Reaktionsgeschwindigkeit hängt von der Diffusionsrate der gasförmigen Komponenten in die Grenzschicht zwischen Flüssigkeit und Gas ab und kann durch geeignete konstruktive Maßnahmen an den Austauschersäulen gefördert werden.

Es hat sich gezeigt, daß auch bei sehr geringen Schadstoffkonzentrationen von unter 1000 ppm eine ausreichende Reaktionsrate und eine weitgehend vollständige Umwandlung der Schadstoffe erhalten werden. Geeignete Grenzwerte für die Konzentrationen der verschiedenen Bestandteile in der restlichen Lösung sind
- für Schwefelsäure: 50 Gew.%
- für Bromwasserstoffsäure: ein Mindestwert von 5% und ein Höchstwert von 40%
- für Brom: ein Höchstwert von 10 Gew.%

Das Brom, das für die Umwandlung von H₂S und/oder CS₂ in den Abgasen benötigt wird, kann durch Elektrolyse aus dem Reaktionsprodukt Bromwasserstoffsäure HBr zurückgewonnen werden

2HBr → H₂ + Br₂

Hierbei entsteht Wasserstoff, der als ein wertvolles und verkaufsfähiges Nebenprodukt betrachtet werden kann.

Die Elektrolyse erfolgt in einer Zelle, in der nur niedrige Spannungen (zwischen 1,0 und 1,6 V) für die Zersetzung von HBr benötigt werden. Dabei entsteht Wasserstoff in Gasform, der leicht von Brom und Wasserdampf-Restspuren befreit werden kann. Das erzeugte Brom bleibt in der umlaufenden Flüssigkeit gelöst.

Bezugnehmend auf die Figur wird ein konkretes Ausführungsbeispiel der Erfindung nun näher beschrieben. Die Abgase werden über eine Eingangsleitung 1 einem Schwefelsäurekonzentrator 2 zugeführt, der beispielsweise als Sprühsäule oder als Tropfenkontaktor mit Rückführung der Flüssigkeit ausgebildet ist. Diesem Konzentrator wird außerdem über eine Leitung 3 eine wässrige Lösung mit 20 Gew.% Schwefelsäure und 15 Gew.% Bromwasserstoffsäure HBr zugeführt. Die Abgase enthalten z.B. 3,0 g/Nm³ an Schwefeldioxid SO₂ und 0,3 g/Nm³ an Schwefelwasserstoff H₂S und besitzen eine Temperatur von 185°C. Aufgrund des intensiven Wärmeaustauschs zwischen den heißen Abgasen und der wässrigen Lösung verdampfen der gesamte Anteil an HBr und ein großer Teil des Wassers, so daß am Ausgang 5 des Konzentrators für die gasförmigen Bestandteile die Abgase und diese dampfförmigen Anteile gemeinsamen vorliegen, während im Konzentrator 2 selbst die höher siedende Schwefelsäure angereichert wird und in regelmäßigen Abständen über eine Ausgangsleitung 4 als verkaufsfähiges Produkt einer Konzentration zwischen 65 und 75 Gew.% abgezogen werden kann. Bei einer Anlage, in der Abgase der oben genannten Zusammensetzung in einer Menge von 50 m³/h bearbeitet werden sollen, entsteht Schwefelsäure in einer Menge von 140 g/h.

Die Abgase werden im Konzentrator auf 130°C abgekühlt und gelangen so in den eigentlichen Reaktor 6, der beispielsweise eine abwärts durchströmte Säule mit einer Kontaktpackung sein kann. In diesem Reaktor kommt die Mischung aus dem Dämpfen und den Abgasen mit einer Lösung in Berührung, die über eine Leitung 7 aus einer Elektrolysezelle 8 eingespeist wird und die 0,5 Gew.% Brom enthält. Die Bromwasserstoffsäure, die dampfförmig mit den Abgasen über die Leitung 5 herangeführt wird, wird in der Flüssigkeit des Reaktors 6 absorbiert, während die erwähnten Schadstoffe mit Brom und Wasser im Reaktor 6 gemäß den oben angegebenen Formeln reagieren und Bromwasserstoffsäure HBr, Schwefelsäure H₂SO₄ und ggfs. Kohlendioxid CO₂ bilden. Die beiden erstgenannten Produkte bleiben mengenmäßig in der flüssigen Phase, während das letztere Produkt mit den restlichen Abgasen über eine Verbindungsleitung 9 zu einer Waschsäule 11 gelangt, in der die letzten Reste von HBr-Dampf, die sich im Gleichgewicht mit der flüssigen Phase befinden, durch Kontakt mit Wasser entfernt werden. Das Waschwasser wird dauernd über die Waschsäule umgepumpt. Ein geringer Anteil dieses Waschwassers wird in den Reaktor 6 zurückgespeist, um alles HBr in der Anlage zurückzuhalten. Die gereinigten Abgase verlassen die Anlage über eine Leitung 12 in Richtung auf einen nicht dargestellten Kamin.

Diese Abgase enthalten praktisch keinen Schwefelwasserstoff mehr.

Es ist günstig, im Reaktor 6 weniger Brom einzusetzen, als für das stöchiometrische Gleichgewicht der betrachteten Reaktionen mit den Schadstoffen erforderlich wäre. Auf diese Weise wird zwar die Reinigungswirkung des Reaktors etwas herabgesetzt, jedoch einem möglichen Verlust an Brom vorgebeugt.

Die Temperatur des Reaktors 6 muß so überwacht werden, daß das Gas in der Ausgangleitung 9 eine ausreichende Feuchtigkeit hat, um das Wasser aus den ankommenden Abgasen zu entfernen. Normalerweise benötigt man keine spezielle Temperaturkontrolle, und der Reaktor kann adiabatisch betrieben werden. Die erforderliche Reaktionstemperatur liegt zwischen 55 und 65°C. Der größte Teil der flüssigen Phase verläßt den Reaktor 6 über eine Leitung 10, die zur Elektrolysezelle 8 führt. Der Durchsatz in dieser Leitung ist mindestens 32 kg/h, wenn eine wässrige Lösung mit 0,5 Gew.% Br₂ erzeugt werden soll. In der Praxis wird oft ein wesentlich höherer Durchsatz gewählt, z.B. 250 l/h, wodurch der Bromanteil in der Leitung 7 auf 0,05 Gew.% absinkt. Ein Teilstrom dieser in der Leitung 10 geförderten wässrigen Lösung aus Schwefelsäure und Bromwasserstoffsäure von etwa 500 g/h wird über die Leitung 3 in den Schwefelsäurekonzentrator 2 eingespeist, wodurch Schwefelsäure aus dem Kreislauf entzogen wird, der aus dem Reaktor 6 und der Elektrolysezelle 8 besteht.

Die Elektrolysezelle 8 kann aus einer Zelle ohne Diaphragma mit Graphit- oder Metallelektroden bestehen. Die Elektrodenoberfläche kann etwa 500 cm² betragen. Der gesamte Zellenstrom liegt bei 75 A und die Stromdichte bei 1,5 kA/m². Die Zellenspannung liegt zwischen 1,4 und 1,5 V. Der energetische Wirkungsgrad einer solchen Zelle liegt üblicherweise bei 85%. Unter Berücksichtigung der oben angegebenen Größenordnung der Anlage ist mit einer Wasserstofferzeugung von 30 l/h zu rechnen, während 200 g/h Brom die Leitung 7 durchströmen.

Es ist zu bemerken, daß keine Feststoffe oder Schlämme für die Reaktionen verwendet werden. Die Reaktionsraten sind hoch und können laufend überwacht werden, so daß Reaktoren kleiner Abmessungen verwendet werden können.

Die Erfindung ist nicht in allen Einzelheiten auf das dargestellte Ausführungsbeispiel beschränkt. So kann, wenn die durch die Abgase mitgelieferte Wärmemenge für die Konzentration der Schwefelsäure nicht ausreicht, natürlich eine äußere Wärmequelle hinzugezogen werden, die auch die Verdampfung von Wasser und HBr vor der Einleitung in den Reaktor 6 bewirken kann. Auf den Konzentrator kann verzichtet werden, wenn auf eine höhere Konzentration der Schwefelsäure kein Wert gelegt wird. Die ursprünglichen Abgase können statt H₂S oder zusätzlich hierzu Schwefelkohlenstoff CS₂ enthalten, der gemäß der oben angegebenen Reaktionsformel abgebaut wird.

Ein Nebeneffekt des erfindungsgemäßen Verfahrens ist, daß auch der Anteil an Schwefeldioxid im Abgas durch das Verfahren drastisch reduziert wird. So haben Versuche ergeben, daß eine Menge von 3,0 g/Nm³ an Schwefeldioxid in den ursprünglichen Abgasen auf ein Zehntel dieses Werts in dem dem Kamin zuzuführenden Produktgas abgesenkt werden kann.

## Patentansprüche

1. Verfahren zum Entfernen von Schwefelwasserstoff (H₂S) und/oder Schwefelkohlenstoff (CS₂) aus Abgasen, dadurch gekennzeichnet, daß die Abgase mit Wasser und Brom in Kontakt gebracht werden, wobei die Brommenge etwas geringer als für das stöchiometrische Gleichgewicht der Reaktionen mit den genannten Stoffen erforderlich gewählt wird, so daß Schwefelsäure (H₂SO₄) und Bromwasserstoffsäure (HBr) in wässriger Lösung und ggfs. Kohlendioxid (CO₂) gebildet werden, und daß aus der Bromwasserstoffsäure in einer Elektrolysezelle wieder Brom und Wasserstoff erzeugt werden.

2. Verfahren nach Anspruch 1, dadurch gekennzeichnet, daß die Abgase zuerst durch einen Schwefelsäurekonzentrator geleitet werden, in den die wässrige Lösung von Bromwasserstoffsäure (HBr) und Schwefelsäure (H₂SO₄) eingespeist wird, und den Bromwasserstoffsäure (HBr) zusammen mit den Abgasen in Dampfform verläßt.

3. Verfahren nach Anspruch 2, dadurch gekennzeichnet, daß die für die Verdampfung der Bromwasserstoffsäure und des Wassers im Schwefelsäurekonzentrator erforderliche Wärmemenge zumindest teilweise durch die Abgase zugeführt wird.

4. Verfahren nach einem der Ansprüche 1 bis 3, dadurch gekennzeichnet, daß die Produktgase, die bei der Reaktion der Abgase mit Wasser und Brom entstehen, anschließend mit Wasser gereinigt werden.

## Claims

1. A method for the removal of hydrogen sulphide (H₂S) and/or carbon disulphide (CS₂) from waste gases, characterized in that the waste gases are brought into contact with water and bromine, the bromine contents being slightly smaller than the quantity necessary for a stoichiometric balance of the respective reaction, so that sulphuric acid (H₂SO₄) and hydrobromic acid (HBr) in an aqueous solution and possibly carbon dioxide (CO₂) are formed and that in an electrolytic cell bromine and hydrogen are produced from said hydrobromic acid.

2. A method according to claim 1, characterized in that the waste gases are firstly led through a sulphuric acid concentrator, into which the aqueous solution of hydrobromic acid (HBr) and sulphuric acid (H₂SO₄) is fed, and from which hydrobromic acid vapour (HBr) escapes together with the waste gases.

3. A method according to claim 2, characterized in that the amount of heat necessary for the vaporization of hydrobromic acid and water in the sulphuric acid concentrator is at least partially derived from the waste gases.

4. A method according to one of claims 1 to 3, characterized in that the product gases which are created during the reaction of waste gases with water and bromine are subsequently cleaned with water.

## Revendications

1. Procédé pour éliminer l'hydrogène sulfurique (H₂S) et/ou le bisulfure de carbone (CS₂) d'un gaz d'échappement, caractérisé en ce que les gaz d'échappement sont amenés en contact avec de l'eau et du brome, la quantité de brome étant légèrement plus faible que celle nécessaire pour l'équilibre stoechiométrique des réactions des produits en jeu, de sorte qu'on obtient de l'acide sulfurique (H₂SO₄) et du HBr en solution aqueuse et, le cas échéant, du dioxyde carbonique (CO₂) et qu'on reproduit du brome et de l'hydrogène dans une cellule d'électrolyse à partir du HBr.

2. Procédé selon la revendication 1, caractérisé en ce que les gaz d'échappement passent d'abord par un concentrateur d'acide sulfurique qui reçoit la solution aqueuse de HBr et de H₂SO₄ et dont les gaz d'échappement sortent ensemble avec du HBr en vapeur.

3. Procédé selon la revendication 2, caractérisé en ce que la quantité de chaleur nécessaire pour évaporer du HBr et de l'eau dans le concentrateur d'acide sulfurique est amené au moins partiellement par les gaz d'échappement.

4. Procédé selon l'une des revendications 1 à 3, caractérisé en ce que les gaz engendrés lors de la réaction des gaz d'échappement avec de l'eau et du brome sont ensuite nettoyés avec de l'eau.
